# EUROPEAN PATENT SPECIFICATION

(11) **EP 3 035 572 B1**
(45) Date of publication and mention of the grant of the patent: **30.01.2019**
(21) Application number: 14290405.1
(22) Date of filing: 16.12.2014
(51) Int. Cl.: H04J 14/02

(54) **METHOD AND SYSTEM FOR PROVIDING CHANNEL PROTECTION IN OPTICAL NETWORKS**
VERFAHREN UND SYSTEM ZUR BEREITSTELLUNG VON KANALSCHUTZ IN OPTISCHEN NETZWERKEN
PROCÉDÉ ET SYSTÈME POUR FOURNIR UNE PROTECTION DE CANAL DANS DES RÉSEAUX OPTIQUES

(43) Date of publication of application: 22.06.2016
(73) Proprietor: Alcatel Lucent, 91620 Nozay (FR)
(72) Inventor: Buchali, Fred, 70435 Stuttgart (DE); Gebhard, Ulrich, 70435 Stuttgart (DE)
(74) Representative: Nokia EPO representatives

(56) References cited:
- EP-A2- 1 473 887
- WO-A1-2008/031452
- US-B2- 6 850 705
- SUN-IL KIM ET AL: "Rapid and Efficient Protection for All-Optical WDM Mesh Networks", IEEE JOURNAL ON SELECTED AREAS IN COMMUNICATIONS, IEEE SERVICE CENTER, PISCATAWAY, US, vol. 25, no. 9, 1 December 2007 (2007-12-01), pages 68-82, XP011198385, ISSN: 0733-8716
- JU WEIGUO ET AL: "Contentionless ROADM architecture and extention for control plane in elastic optical path network", NETWORK ARCHITECTURES, MANAGEMENT, AND APPLICATIONS IX, SPIE, 1000 20TH ST. BELLINGHAM WA 98225-6705 USA, vol. 8310, no. 1, 28 December 2011 (2011-12-28), pages 1-6, XP060024923, DOI: 10.1117/12.904422 [retrieved on 1901-01-01]

## Description

### Field of the Invention

The present document relates to optical data transmission systems. In particular, the present document relates to a method for protection switching in an optical data transmission system using shared wavelength division multiplex (WDM) channels.

### Background of the Invention

As the transmission bandwidth of optical data transmission systems and optical telecommunication equipment increases, the impact caused by network interruption becomes more and more significant. Naturally, this implies to users and network providers an increase in loss of revenue. For instance, a 10ms outage on a 40Gbit/s optical data transmission system will cause 50MByte of transmission data to be lost. Thus, the ability of telecommunication equipment to provide very fast mechanisms for traffic restoration in the event of traffic impairments is an essential characteristic and becomes more important with increasing data rates.

Linear and shared protection as standardized by the ITU-T committee in recommendation G.873.1 for optical transport network (OTN) networks are based on providing some redundant capacity within the network. In order to maintain the transmission service, the protected traffic is switched over to an alternative route in the event of a failure, e.g. fiber cut or degradation of the service. In all protection scenarios there is a conflict between cost and service outage. Typically, fast protection mechanisms suffer from high costs wherein slower protection mechanisms are more cost efficient. Basic protection scenarios which use an all-optical approach (i.e. the wavelength slice for transmitting an optical channel is invariant and must be transmitted through the whole optical network in a transparent manner) are:
- 1+1 protection: In 1+1 protection, working path and protection path are simultaneously active, the transmit signal is split at the transmitting network node and sent via disjoint links (working and protection path) to the receiving network node which receives both signals simultaneously, monitors them, and switches to the optical signal provided via the protection path in case the optical signal provided via working path is degraded or lost. The resources for the protection path are permanently and exclusively reserved for said working path. 1+1 protection is expensive because it doubles the number of required WDM channels.
- 1:N shared protection: In 1:N shared protection, a protection fiber protects a working fiber segment. All wavelengths of the working fiber are switched by an optical cross-connect to the protection fiber. Protection is not end-to-end but segment per segment. An entire protection fiber must be deployed for each protected segment. In an all-optical protection scenario, these protection fibers must be permanently reserved and cannot be used by other traffic. In meshed networks this technique requires excessive resources and is thus typically applied in (dual) ring topologies. Switching is per fiber and not per wavelength and does not distinguish service classes, i.e. the operator is forced to treat restoration service class the same as primary service class.
- Restoration: In a restoration approach, the protection path is only activated upon failure. After detection of an impairment of the working path, the network control plane determines a free wavelength on an alternative route. With restoration, resources are allocated as needed and can be shared by multiple working paths. However, this mechanism comes at the cost of delay. Besides the delay caused by the routing algorithm which must compute a free path through the optical network, the optical switching elements (e.g. wavelength-selective switches, WSSs) need to be reconfigured. Typical implementations of WSSs require complex control-signal computation to change the route of an incoming WDM channel to another output port. In addition, it may be possible to change the transmission wavelength, i.e. during protection switching the clients receive information to re-tune their transponders to a new wavelength in order to ease the computation of a free path through the optical network. So, tunable transponders and signaling between client and optical network are required, or the client transponder may be administratively included into the network management domain such that the network control plane is able to trigger said re-tuning.

Document SUN-IL KIM ET AL: "Rapid and Efficient Protection for All-optical WDM Mesh Networks", IEEE Journal on selected areas in communications, IEEE Service Center, Piscataway, US, vol. 25, no. 9, 1. December 2007, pages 68 - 82 proposes a protection switching mechanism for all-optical WDM mesh networks using optical cross connects.

United States Patent US 6,850,705 B2 refers to an online distributed path routing method and system providing protection path selection in a WDM network.

European Patent Application EP 1 473 887 A2 refers to a protection scheme for a communication network under multiple failures. One or more backup paths are computed between the ingress and egress nodes which are activatable upon a failure condition associated with the working path or the backup paths.

### Summary of the Invention

There is a need to provide for a fast and resource-efficient method for protection switching. Similarly, an optical data transmission system implementing fast and resource-efficient protection switching is desired.

According to a first aspect, a method for protection switching in an optical data transmission network is disclosed. The optical data transmission network provides redundant transmission capacity for switching at least one WDM channel from a working path to a protection path. The working path may be an optical transmission path, e.g. an optical fiber, comprising transmission capacity for a plurality of WDM channels. The WDM channels are transmitted via said working path if the optical transmission path shows normal operating characteristics while the protection path is in idle state. In case of network impairments, a protection switching routine may cause a switching of at least one WDM channel from the impaired working path to said protection path.

In anticipation of a possible impairment of a certain working path, at least one protection path may be determined for each working path, the protection path providing resources for rerouting at least one WDM channel from the working path to the protection path. Said determination of a protection path may be performed on the basis of single WDM channels or groups of WDM channels, i.e. for each WDM channel or each group of WDM channel a certain protection path is determined. In other words, the protection path may not need to provide transmission capacity for all WDM channels transmitted via a corresponding working path but may only provide transmission capacity for one or some of the WDM channels transmitted via said corresponding working path. Preferably, for each WDM channel transmitted via a certain working path, one or multiple protection paths are pre-computed in order to provide redundant backup resources for a later impairment of the working path.

Furthermore, switching information for one or more switching units may be pre-computed. Said switching information at least partially comprises switching settings associated with a switching unit comprised within a network node of the optical data transmission network. The network node may be a network node arranged along the working path or the protection path. The pre-computation may be performed in a network entity other than the network node comprising the switching unit, e.g. in a central network management unit.

Said switching information may comprise information regarding how to control the switching unit for re-routing one or more WDM channels from a first output port (coupled with the impaired working path) to a second output port (coupled with the protection path associated with said impaired working path) of the switching unit in order to achieve said protection switching. The pre-computation of the switching information may be performed in a central network unit having sufficient resources for computing and storing said switching information. Depending on the technology applied in the switching unit, the computation of the switching information may require significant processing power and hence processing time. Further, the switching information may require significant memory for storing. Said switching may be an all-optical switching, i.e. the switching unit is adapted to completely perform the switching in the optical domain without transforming the optical signal into the electrical domain.

After pre-computing said switching information, said pre-computed switching information may be stored in a data repository. Said data repository may be, for example, a database that is stored in a central network unit and/or a network node. If the data repository is local (i.e. in a/each network node) and the pre-computation is performed in a central network unit, the switching information is preemptively distributed from the central network unit to network nodes before a network impairment is detected, e.g. during setup and initialization of the network or of a working path. It is worth mentioning that the steps of determining one or more protection paths, pre-computing switching information and storing said switching information are performed in advance, i.e. well before a protection switching situation in order to have switching information available in case of a network impairment.

The method comprises receiving the pre-computed switching information at a network node of the optical data transmission network. For example, the pre-computed switching information may be transmitted from the data repository arranged in a central network unit. If a network failure occurs within a working path, at least a portion of the pre-computed switching information is provided to a switching unit included in the network node which has to perform a switching operation during protection switching. The switching unit may comprise an interface for receiving said switching information. After receiving switching information at the switching unit, the routing of at least one WDM channel from the working path to the protection path is changed by the switching unit based on information included in the pre-computed switching information. In other words, the switching unit performs switching of one or more WDM channels from the working path to the protection path by using the provided pre-computed switching information. The switching information may at least comprise switching settings indicating how to tune switching elements included in the switching unit for performing said re-routing.

Said method is advantageous because shared protection switching is resource efficient. Multiple WDM channels share protection resources (e.g. spare links, WDM channels, wavelenghts) and only in case of a protection switching situation, a free protection path providing free transmission resources for said WDM channel (free wavelength slice for transmitting said WDM channel without wavelength conversion) is deployed. By pre-calculating the switching information, protection switching time can be saved because the time for just-in-time calculation of complex switching parameters or switching settings at the point of time at which the protection switching situation occurs can be saved. As already mentioned, such computation may be processing-time intensive. By pre-computing the switching information, said information is already available when needed. Further, the computation may be performed on network devices having more computational power.

According to embodiments, the switching unit comprises a wavelength-selective switch (WSS) and the pre-computed switching information includes control information for controlling a switching engine of the WSS. The WSS may be an all-optical WSS which splits the optical signal received at an input port of the WSS and comprising multiple WDM channels such that the optical signal portions associated with certain WDM channels are spatially separated (e.g. by means of a grating) and provided towards the switching engine which is adapted to route the WDM channels according to said pre-computed switching information. More in detail, the switching settings included in the switching information may enable the switching engine to perform the desired all-optical routing of the WDM channels within the switching unit such that after performing said switching the WDM channels appear at the predetermined output ports of the switching unit.

According to embodiments, the switching settings include information for controlling switching elements included in the switching unit. Specifically, the switching engine of the switching unit may comprise multiple switching elements which are adapted to perform a deflection of the optical beam associated with a certain WDM channel for guiding and providing said WDM channel at a certain output port. The switching elements may be any optical elements which may be able to provide a change of the propagation direction of the optical beam associated with a certain WDM channel. The switching elements may be arranged in a switching element array, i.e. a plurality of switching elements is arranged in a two-dimensional plane (x-y-plane). In a WSS, the signals corresponding to individual WDM channels are separated and spatially distributed in said two-dimensional plane where individual switching elements are arranged. Preferably, each of said switching elements is individually controllable by said switching settings or part thereof included in the switching information. The type of switching element may depend on the technology of the switching unit and may be a liquid crystal (LC) cell (in case of a switching unit comprising a switching engine based on LC-technology or LCoS-technology (LCoS: liquid crystal on silicon)) or a mirror in case of a switching engine using MEMS-mirror-technology (MEMS: micro-electromechanical system).

According to embodiments, the optical path of an optical beam associated with a certain optical WDM channel is changed in the switching unit by controlling the switching elements based on said switching settings. In other words, a switching element deflects the optical beam associated with a certain optical WDM channel within the switching unit according to the (pre-computed) switching settings thereby obtaining a re-routing of the optical signal associated with a certain WDM channel towards an output port which is coupled with the protection path. By means of said change of optical beam routing, each WDM channel can be independently routed to a certain output port.

According to embodiments, the switching settings include information for controlling switching elements included in the switching unit such that at least one WDM channel received at the input port of the switching unit is rerouted from a first output port to a second output port of said switching unit. The switching settings typically depend on the switching technology used in the WSS, such as LC-technology or MEM technology, and comprise corresponding control information. Thereby, a protection switching from the impaired working path coupled with the first output port to the protection path coupled with the second output port is obtained.

According to embodiments, the pre-computed switching information comprises information regarding a multi-dimensional image including coordinate values and a gray value associated with each of said coordinate values for controlling the WSS according to said multi-dimensional image. For example, the image may be two-dimensional and include pairs of coordinate values and a gray value associated with each of said coordinate values. The information regarding a two-dimensional image may be image data in a given data format. In other embodiments, the pre-computed switching information comprises a multi-dimensional image (e.g. 3-dimensional) including coordinate values and a value associated with each of said coordinate values for controlling the WSS.

The two-dimensional image may comprise xy-coordinate information which is associated with the spectral wavelength slice (WDM channel). The xy-coordinate information may indicate how to switch or deflect said spectral wavelength slice, whereas the information regarding the attenuation may be coded as grayscale. In embodiments where the switching unit is based on LC-technology and comprises a plurality of liquid crystal (LC) cells, the image may include x-y-coordinates and a corresponding gray value of the switching element. Further, the state of every pixel corresponding to the two-dimensional image may be controlled by a transistor whose control signals determine deflection of an input color and brightness. It is worth mentioning that other WSS technologies like MEM technology may be used, requiring adapted control schemes with a modified coding of spectral information and associated attenuation which may also be included in the pre-computed switching information.

According to embodiments, the pre-computed switching information comprises control signals for the individual switching elements which are typically arranged in a two-dimensional array. These control signals control a) the orientation of the individual switching elements (x-y-coordinate) thereby determining the deflection of the light beam from input port to output port and b) the brightness (gray value) of the beam at the output port. At the lowest technical level an image may contain a control signal for every switching element and therefore its data structure will reflect the array structure of the switching elements. WSS manufacturers, however, may provide an application programmers interface (API) which allows controlling the WSS using higher-level programming language, e.g. just input port, output port, wavelength and brightness. In that case, the pre-computed switching information may comprise input port, output port, wavelength and brightness information.

According to embodiments, the pre-computed switching information comprises optical channel information, said optical channel information indicating which optical channel received by the switching unit or wavelength slice associated with a certain optical channel received by the switching unit has to be switched. For example, the optical channel information may be a channel indicator or channel number for associating said switching settings with a certain WDM channel. In other words, the optical channel information clearly may indicate which WDM channel received at one of the input ports of the switching unit has to be re-routed according to the switching settings included in the pre-computed switching information.

According to embodiments, the pre-computed switching information comprises routing information, said routing information indicating at which input port the WDM channel to be switched is received and at which output port said WDM channel has to be transmitted. In case that only one input port is available, the routing information may only comprise information regarding the output port.

According to embodiments, the pre-computed switching information comprises one or more attenuation coefficients being associated with at least one wavelength slice or wavelength channel, said attenuation coefficients defining the attenuation level provided to said wavelength slice or wavelength channel. By means of said attenuation coefficients, a channel-specific attenuation of the WDM channels may be achieved in order to equalize the power of the WDM channels transmitted at a common output port.

According to embodiments, the pre-computed switching information comprises information regarding the switching mode, said switching mode defining the switching behavior of the switching unit. Specifically, the switching mode may define if hard- or soft-switching is desired. Alternatively or additionally, the pre-computed switching information may comprise multiple sets of switching information or information indicating a multi-step switching, i.e. the protection switching is not obtained by a single switching operation but multiple successive switching steps are performed in order to obtain a smooth switching behavior.

According to embodiments, the pre-computed switching information comprises information for releasing no longer used resources. Similarly to the above-mentioned embodiments, the switching information used for releasing the no longer used working path may also comprise information regarding which WDM channel or wavelength slice has to be switched off at the output port of the switching unit coupled with the impaired working path, information regarding the input port and the output port being affected by said switching off, the switching mode (hard- or soft- switching) and/or information regarding a multi-dimensional image including e.g. pairs of coordinate values (for a two-dimensional image) and a gray value associated with each of said coordinate values for controlling the switching unit according to said two-dimensional image in order to obtain said switching.

According to embodiments, for each working transmission path, multiple protection paths are pre-computed and multiple working paths share the transmission resource provided by a single protection path. In the present shared protection scenarios, there is no exclusive reservation of a protection path, e.g. no exclusive reservation of a certain WDM channel or a group of WDM channels in a certain protection path for a corresponding WDM channel or group of WDM channels transmitted via the working path. By providing multiple protection paths for a single working path, the probability that at least one non-occupied protection path is available in case of a working path impairment is significantly increased.

According to embodiments, in case of changing the routing of at least one WDM channel from the working path to the protection path, the optical wavelength used for transmitting said WDM channel is maintained. In other words, there is no wavelength conversion and the switching is only obtained by changing the propagation direction (path) of an optical beam associated with a certain WDM channel within the switching unit. Additionally, also the attenuation of the optical beam may be changed when changing the routing.

According to embodiments, the switching information is stored in a local data repository associated with the network node comprising the switching unit (i.e., each network node comprises its own local data repository) or the switching information is stored in a central data repository, said central data repository being coupled with multiple network nodes for providing pre-computed switching information to multiple switching units. The data repository may be a database which is included in the network control plane. More specifically, the data repository may be coupled with a local or central control entity of the network control plane in order to receive the pre-computed switching information from said control entity and provide the pre-computed switching information to the switching units via said control entity. The local or central control entity may be included in a network management unit of the network control plane. Said network management unit may be adapted to determine the protection path(s) for a certain working path.

According to embodiments, the switching information is associated with a single WDM channel or a channel group comprising multiple WDM channels in order to switch a single WDM channel or a channel group. In other words, the switching information may cover a protection switching scenario which refers to one or multiple WDM channels. Providing switching information to a network node which covers the switching of multiple WDM channels is advantageous because multiple WDM channels being affected by the working path impairment are switched simultaneously (avoiding channel-by-channel restoration) which lowers also the administrative expenditure.

According to a further aspect, a network node for protection switching in an optical data transmission network providing redundant transmission capacity for switching at least one WDM (wavelength division multiplex) channel from a working path to a protection path is provided. The network node comprises a switching unit, a receiver unit configured to receive pre-computed switching information, said switching information at least partially comprising switching settings associated with the switching unit, and at least one processor unit configured to provide, in case of a network failure, at least a portion of the pre-computed switching information to the switching unit. The switching unit is configured to change the routing of at least one WDM channel from the working path to the protection path based on information included in the pre-computed switching information.

According to a further aspect, an optical data transmission system is disclosed. The optical data transmission system comprises an optical transmission network and at least one network node. The at least one network node includes at least one switching unit coupled with multiple transmission paths of said optical transmission network (via input/output ports). The switching unit is adapted to switch at least one WDM channel from a working path to a protection path by changing the internal routing from input to output port. The optical data transmission system may further optionally comprise a network management unit to determine at least one protection path associated with a working path, the protection path providing resources (e.g. spare network links and ports on network nodes) for rerouting at least one WDM channel from the working path to the protection path. A data processing unit may be provided to pre-compute switching information, said switching information at least partially comprising switching settings associated with said switching unit to control the (internal) routing of a WDM channel from an input port to an output port of the switching unit. The pre-computed switching information may be stored in a data repository, e.g. arranged in a network node. In case of multiple network nodes, the pre-computed switching information may be split up into portions relating to the routing of a network node and the respective portion may be forwarded to the corresponding network node and stored there. Furthermore, a data link between said data repository and said switching unit may be provided, for transmitting, in case of a network failure, at least a portion of the pre-computed switching information to the switching unit in order to change the routing of at least one WDM channel from the working path to the protection path based on information included in the pre-computed switching information. Thus, if a rerouting is triggered, the respective portion of the pre-computed switching information can be directly provided to the switching unit, to affect the routing of the at least one WDM channel and thereby establishing the protection path in a short period of time.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Further, if not explicitly indicated otherwise, embodiments of the invention can be freely combined with each other.

### Brief Description of the Drawings

The invention is explained below in an exemplary manner with reference to the accompanying drawings, wherein
- Fig. 1: illustrates an example schematic representation of an optical data transmission network implementing protection switching by end-to end protection of the working path;
- Fig. 2: illustrates an example schematic representation of an optical data transmission network implementing protection switching by segment-to-segment protection;
- Fig. 3: shows an example schematic block diagram of a WSS illustrating the basic functionality of said WSS;
- Fig. 4: illustrates an example schematic block diagram of an example network node being coupled with the network control plane; and
- Fig. 5: illustrates an example schematic flowchart for performing protection switching.

### Detailed Description of Embodiments of the Invention

In this disclosure, one or more optical backup paths are pre-computed for each primary path by the optical network, like in the 1+1 protection scenario, but the resources are not exclusively reserved. Several backup paths may use same fibers and/or same wavelength. The backup paths are only used when needed, and can be shared with other backup paths. Backup paths use the same wavelength as the primary path. Backup resources can carry noise in idle state to minimize the impact of their activation for data transport on neighboring channels. Pre-computation of backup paths enables the pre-computation of complex control signals for the WSS in each node. The required complex control signals for the WSSs (in the following called "images") may be stored in a control database which can be local to the node or centralized for the network at a management system.

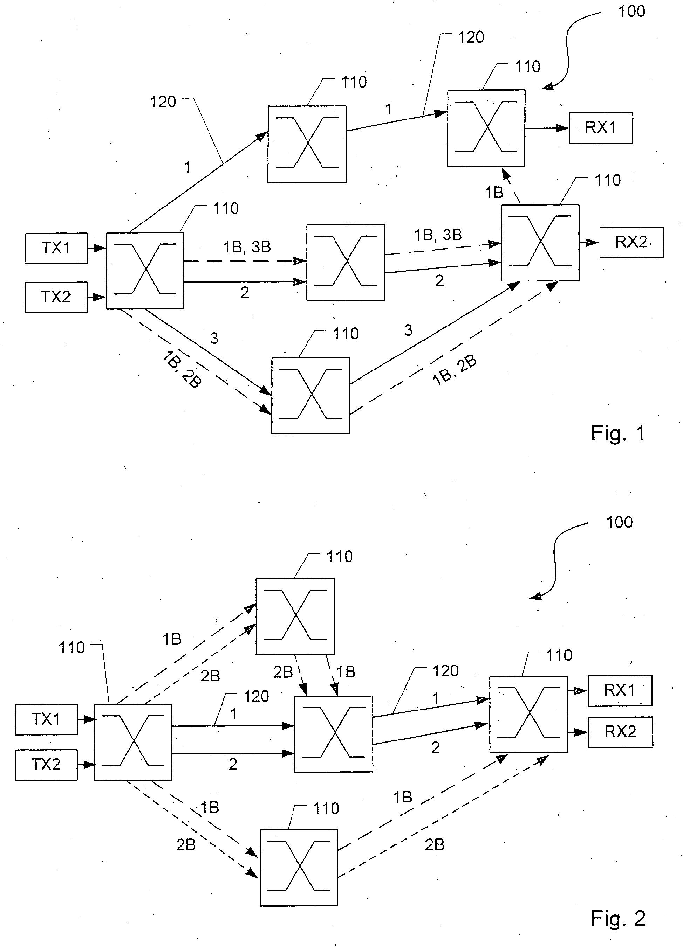

Fig. 1 schematically illustrates an optical data transmission network 100 including protection switching functionality, wherein said protection switching functionality is an end-to-end shared-wavelength protection. The optical data transmission network 100 comprises a plurality of network nodes 110. Said network nodes 110 comprise one or more input ports and one or more output ports. Said input ports and output ports are used for coupling the network nodes 110 with each other. More in detail, the network nodes 110 are connected with each other via said input/output ports by means of optical links 120, for example optical fibers, in order to transmit optical information between said network nodes 110. An optical transmitter TX1, TX2 may be coupled with an input port of one of said network nodes 110 for providing optical data via said optical data transmission network 100 to an optical receiver RX1, RX2 which is coupled with an output port of another network node 110. The optical data transmission network 100 may use a wavelength division multiplex (WDM) technology for transmitting a plurality of optical channels via a single optical fiber.

In order to route the optical data provided by an optical transmitter TX1, TX2 and associated with a certain optical channel of the WDM channel grid to an optical receiver RX1, RX2, each network node 110 comprises at least one switching unit. Said switching unit is adapted to route the optical data received at a respective input port of the network node 110 to a certain optical output for providing the optical data to the predetermined optical receiver via an appropriate transmission path. For example, the optical data are transmitted in a certain optical channel, said optical channel being associated with a certain wavelength of the WDM channel grid. More in detail, the optical channel may be associated with a certain wavelength slice of the optical spectrum used for transmitting data. The switching units may be adapted to maintain said wavelength during switching operation, i.e. there is no wavelength conversion within said switching unit. Preferably, the switching is an all-optical switching, i.e. the switching between a switching unit input and a switching unit output is obtained by a wavelength-selective routing of the optical beam. Preferably, the switching unit is a wavelength-selective switch (WSS) or includes a WSS.

In order to be able to reroute the optical data transmission in case of a network failure or network damage, the optical data transmission network 100 provides protection resources. The optical data transmission network 100 may provide at least one protection path for protecting a data transmission path, in the following also referred to as working path. A network control plane may be adapted to detect a network failure or network damage (such as impairment or loss of an optical signal) and trigger a protection switching routine for switching the data transmission from the working path to the protection path.

According to the embodiment of Fig. 1, the optical data transmission network 100 provides multiple working paths 1-3. Said working paths 1-3 use different routes through the optical data transmission network 100. For protecting said working paths 1-3, the optical data transmission network 100 further provides multiple protection paths, in the present embodiment a first protection path 1B, 2B and a second protection path 1B, 3B. The first protection path 1B, 2B is associated with the working paths 1, 2, i.e. provides protection resources in case that one of said working paths 1, 2 is impaired. Similarly, the second protection path 1B, 3B is associated with the working paths 1, 3, i.e. provides protection resources in case that one of said working paths 1, 3 is impaired. So, in contrary to a 1+1 protection scenario, where one working path is associated with one protection path and protection resources are permanently and exclusively reserved for said working path, in the present embodiment, the protection resources are not exclusively reserved for a certain working path. In other words, the protection resources provided by a certain protection path can be shared among different working paths (if needed). In addition, several protection paths may use the same optical links and/or same optical wavelengths. However, the protection path associated with a certain working path provides the same wavelength channels (WDM channels), as protection resources, the working path uses for transmitting data. In order to increase the probability that there are free protection resources in case of an impairment of a certain working path, multiple different protection paths may be associated with a working path.

In case of a network impairment, the network control plane initiates a switching of data transmission from working path to one of said protection paths. In case that multiple protection paths are associated with a certain working path, prioritization information may be used for selecting one of said protection paths. According to the present embodiment, the working path 1 is associated with different protection paths (1B, 3B), (1B, 2B). For example, the protection path (1B, 3B) may be prioritized, so said protection path (1B, 3B) may be selected in case of a network defect within the working path 1. In case that said protection path (1B, 3B) is already occupied (e.g. because of a network defect within working path 3), the further protection path (1B, 2B) may be selected.

Fig. 2 shows a further embodiment of an optical data transmission network 100 including protection switching functionality, wherein said protection switching functionality is a network-segment-based shared-wavelength protection. So, protection paths are not determined on an end-to-end basis (i.e. covering the whole working path from the transmitter to the receiver) but on a segment-per-segment base (i.e. the whole working path is divided in multiple segments and protection paths are determined for each segment). Similar to the embodiment shown in Fig. 1, the protection resources are not exclusively reserved for a certain working path, but the protection resources provided by a certain protection path are shared among different working paths. In addition, several protection paths may use the same optical links and/or same optical wavelengths. However, the protection path associated with a certain working path provides the same wavelength channels (WDM channels), as protection resources, the working path uses for transmitting data. In order to increase the probability that there are free protection resources in case of an impairment of a certain working path, multiple different protection paths may be associated with a working path.

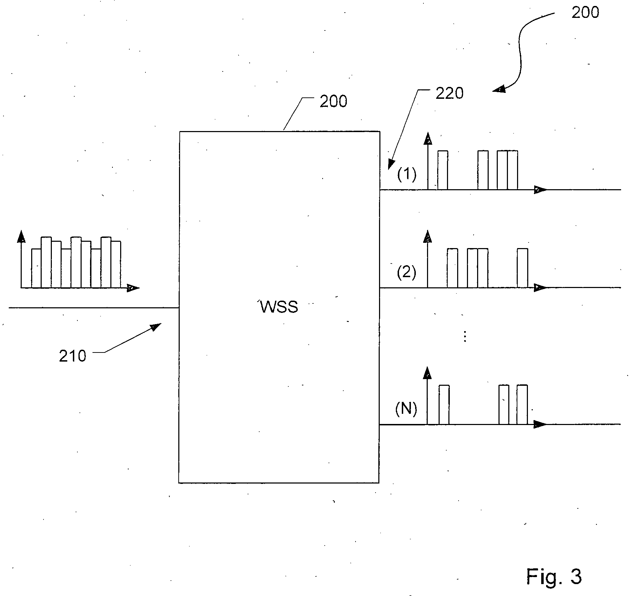

As already mentioned above, in case of a network defect, the protection switching may be performed by providing switching information to the switching units comprised in said network nodes 110, causing said switching units to reroute at least one WDM wavelength channel. Said switching units may be wavelength-selective switches (WSS). The basic functionality of a WSS 200 is illustrated in Fig. 3. The WSS 200 comprises at least one optical input port 210, for example, a common input port, and multiple (1...N) opposing multi-wavelength output ports 220 where each WDM wavelength channel provided to the input port 210 can be routed to any one of the multiple output ports 220. It is worth mentioning that the routing of a certain wavelength channel is independent of how all other wavelength channels are routed. Said routing is dynamic and may be controlled through a control interface provided at the WSS. Switching information and in particular switching settings may be provided to the WSS via the control interface. Additionally, each routed wavelength channel can be independently attenuated to allow for channel power control and equalization.

For changing the routing configuration of a WSS, complex control signals have to be provided to the control interface of the WSS by the network control plane. In addition, for a dynamic switching of optical data from a working path to a non-occupied protection path, said complex control signals have to be available at the point of time (or at least as soon as possible), the protection switching trigger is received. The protection switching time (period of time between receiving the protection switching trigger and providing the optical data via the protection path) is significantly impacted by the time when WSS control signals are available. In the prior art, said WSS control signals are computed when the protection switching trigger is received, thus resulting in a rather long delay until the protection path is established.

In order to minimize said protection switching time, switching information being included in said complex control signals are pre-computed and stored in a data repository. Said data repository may be, for example, a database coupled with or included in the network management plane. Each pre-computed switching information may be associated with a certain protection switching scenario and, in case that a protection switching trigger is received, said switching information correlated with the protection switching scenario, for which a protection switching trigger was received, is read out of the data repository and provided to the switching unit (WSS), thereby reducing the protection switching time.

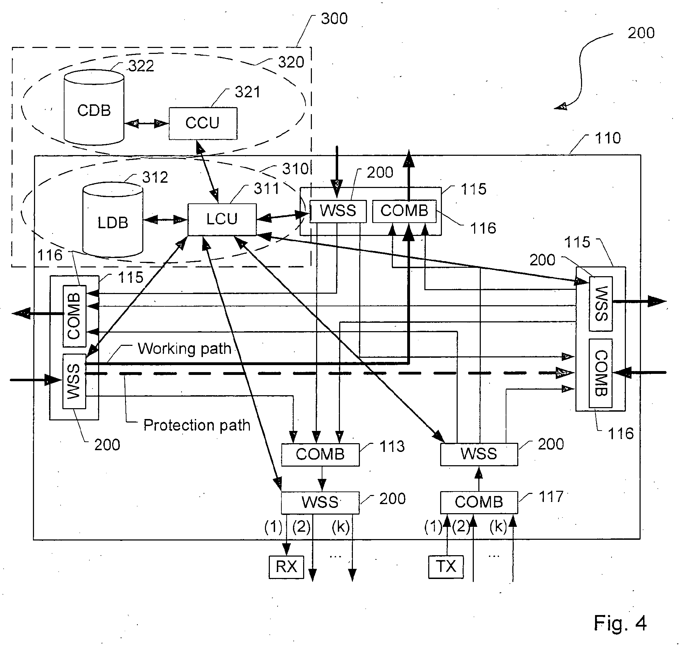

Fig. 4 shows an example schematic diagram of a network node 110 including multiple WSSs 200. Said network node 110 may be, for example, a tunable and reconfigurable add/drop multiplexer. In more detail, Fig. 4 shows a simplified exemplary architecture for a 3-degree tunable and reconfigurable add/drop multiplexer (TOADM). Primary and back up paths fork in the ingress WSS of the TOADM. In case of failure, the ingress WSS switches the client signal to another outgoing port connected to the backup path. For end-to-end protection, the ingress (bottom) WSS is the WSS of the add block for locally added traffic, which in this example is connected to a locally generated client signal (1) and input wavelengths (2)-(k). For transit traffic (segment protection), the ingress WSS is the WSS connected to each incoming fiber. In Fig. 4, transit traffic is indicated by the bold line (wavelength or waveband) coming in from the left (west) port. The bold line symbolizes the working path to the top (north) port, its protection path is the dotted line to the right (east) port.

Said network node 110, specifically the WSSs 200, are coupled with a network management plane 300 for providing protection switching information to said WSSs 200. More in detail, the network node 110 comprises at least one, in the present embodiment three coupling/switching entities 115, wherein each coupling/switching entity 115 comprises at least one WSS 200 and at least one combiner 116. Said coupling/switching entities 115 comprise an interface for coupling the network node 110 with another network node 110 via an optical link 120. The network node 110 may further comprise an interface for coupling local traffic into the optical data transmission network 100. A local transmitter TX may be coupled to a combiner 117 and a WSS 200 for transmitting the optical data provided by the transmitter TX via one of the outgoing optical links coupled with the network node 110. Similarly, the network node 110 may comprise a further combiner 113 and a WSS 200 for providing optical data received via an optical link coupled with the network node 110 to a local receiver RX.

The network control plane 300 may comprise a first control plane layer 310 and a second control plane layer 320. The first control plane layer 310 may be a local control plane layer being associated with the respective network node 110, and the second control plane layer may be a central control plane layer 320 for controlling multiple network nodes 110. Each control plane layer 310, 320 may comprise a control entity. For example, the first control plane layer 310 may comprise a local control entity 311 and the second control plane layer 320 may comprise a central control entity 321. The data repository for storing the pre-computed switching information may be local data repository 312, i.e. associated with the first control plane layer 310, or a central data repository 322, i.e. associated with the second control plane layer 320. In other words, the pre-computed switching information may be locally stored within the network node 110, for example, by using data storage coupled with the local control entity 311, or may be centrally stored in the data storage coupled with the central control entity 321, i.e. in a storage being associated with multiple network nodes 110.

In case of a network failure, a protection switching procedure is triggered and protection switching is performed by using pre-computed switching information stored in the data repository. More in detail, the switching information is loaded from the data repository and transmitted to the WSS 200 affected by said protection switching. In case that the switching information is stored in a data repository associated with the first control plane layer 310, i.e. the switching information is stored in the local data repository 312 associated with the network node 110, each network node 110 affected by said protection switching may receive switching information from its local data repository 312 in order to provide said the switching information to the respective WSS 200. If a central data repository 322 is used, each network node 110 affected by said protection switching may receive switching information from said central data repository 322. After receiving the switching information at the WSS 200, the WSS 200 may perform a rerouting of optical data by switching the transmission of one or more WDM channels from first output port to a second output port of the WSS 200. The data repository may comprise a plurality of sets of switching information, each set of switching information being associated with a certain protection scenario. Each protection scenario may refer to one WDM channel or group of WDM channels included in a certain optical link 120. Thereby, the optical data transmission network 100 may provide a protection path to a degraded or defective working channel according to the present network configuration, and even if a particular protection path associated with the degraded or impaired working path is not available (because of the protection path is already used as a backup path for another impaired working path), another protection scenario using an alternative protection path may be established by using switching information stored in the data repository.

The switching unit, specifically the WSS 200 is adapted to provide an all-optical routing of WDM channels between the input port and the output ports. In other words, no opto-electrical conversion or wavelength conversion (conversion from a first WDM channel comprising a first wavelength to a second WDM channel comprising the second wavelength) is performed within the WSS 200. In yet another words, the optical path of the optical beam associated with a certain optical WDM channel is affected (e.g. deflected) within the switching unit in order to re-route the optical WDM channel to another output port. In order to provide said all-optical routing, the switching unit comprises multiple switching elements. Depending of the technology of the switching unit, the switching element may be a LC-cell, a pixel of a liquid crystal on silicon (LCoS) switching engine or a mirror of a mirror array of a micro-electromechanical system (MEMS). Independent of the switching technology used by the switching unit, the switching element is adapted to deflect a received optical beam being correlated with a certain WDM channel in a certain direction in order to provide said WDM channel to a certain output port of the switching unit. For example, the switching elements may be arranged in a two-dimensional array, and the switching behavior of each switching element is controlled by one or more switching settings comprised within the switching information. So based on the pre-computed switching information, the switching unit is able to configure a plurality (typically a large number) of switching elements included in said switching unit in order to perform upper mentioned routing of the WDM channel required for protection switching.

Besides upper-mentioned switching settings, the switching information may further comprise additional information which are also pre-computed and stored within the data repository in order to lower the protection switching time, i.e. the outage caused by protection switching. Said additional information may comprise optical channel information indicating which optical WDM channel (typically a wavelength slice including optical data associated with a certain optical channel) received by the switching unit has to be switched. For example, the optical channel information may indicate a channel number, said channel number used for defining a wavelength slice within the optical spectrum for determining a certain WDM channel to be rerouted.

In addition, the additional information included in the switching information may comprise routing information, said routing information indicating which input port of the switching unit is receiving the WDM channel to be switched. In addition, said routing information may indicate the output port for outputting said WDM channel. In other words, the routing information indicates how to route the WDM channel through the switching unit by defining the input port and the output port. In case that the switching unit only comprises a single input port, the routing information only comprises information regarding the output port.

As already mentioned above, the switching unit, specifically the WSS may be adapted to attenuate the optical channel. Specifically each WDM channel may be independently attenuated by a certain attenuation value. Thereby, the optical power of the WDM channels can be controlled and equalized. In order to be able to attenuate the optical channels, the switching information may comprise attenuation coefficients, each attenuation coefficient being associated with a certain WDM channel in order to define the attenuation level of said wavelength channel. Preferably, multiple sets of attenuation coefficients may be provided to the switching unit wherein each set of attenuation coefficients is associated with a certain output port in order to be able to attenuate the same WDM channel at different output ports differently.

Furthermore, the pre-computed switching information may comprise information regarding the switching mode. The switching mode included in the switching information may indicate the switching behavior used when performing protection switching. For example, there may be a hard switching scenario, i.e. the optical power of the WDM channel is switched on/off quickly, or a smooth switching scenario, i.e. the attenuation provided to the WDM channel is increased/decreased gradually. The switching mode may also indicate that multiple switching steps have to be performed in order to avoid effects on neighboring channels (hitless switching). In that case, the pre-computed switching information may comprise multiple sets of switching settings in order to control multiple subsequent switching steps.

Similarly to the upper-mentioned set of information (information how to establish the data transmission via the protection path), also information for releasing data transmission via the prior working path may be included in the switching information. More in detail, the switching information may indicate how the data transfer to an output of the switching unit coupled with the working path should be deactivated or disabled. Similarly to the switching information for establishing of a data transmission via the protection path (enabling switching information), the switching information referring to disabling the data transmission via the prior working path (disabling switching information) may comprise switching settings for controlling switching elements included in the switching unit. Said switching settings may control the switching elements such that the WDM channel is no longer provided to the output coupled with the impaired working path. In other words, the switching elements are controlled by said switching settings such, that the WDM channel which has been transmitted via the working path does no longer appear at the output of the switching unit which is coupled with said impaired working path.

In addition, said disabling switching information may comprise optical channel information indicating which optical WDM channel (typically a wavelength slice including optical data associated with a certain optical channel) received by the switching unit has to be switched off at the output port coupled with the impaired working path. Furthermore, the disabling switching information may comprise information regarding at which output port the WDM channel has to be deactivated , regarding the switching mode (hard/soft switching) etc. Said disabling switching information may also be pre-computed and stored in the data repository in order to be available in the short period of time when protection switching is required.

The pre-computed switching information may be associated with a single WDM channel or a group of multiple WDM channels, wherein said group of multiple WDM channels comprise multiple adjacent WDM channels or multiple independent WDM channels which can be distributed arbitrarily within the WDM channel grid. By grouping multiple WDM channels which are transmitted via a common working path, a pre-computation of switching information covering the information for switching multiple WDM channels comprised within said group is possible which reduces the computational effort for computing, storing and administrating said switching information.

In the upper mentioned protection scenario, the protection paths reserved for providing backup for one of said working paths are only needed and employed if an impairment of a working path associated with said protection path occurs. In other words, there is only a data transmission via said protection path in case of a defect of the associated working path. In order to minimize the impact of activation of the protection path for data transmission on neighboring optical channels, the protection paths may carry noise in idle state. Due to the transmission of noise via the protection paths in idle state, the change of optical power when activating the data transmission via the protection path is minimized thereby reducing detrimental impacts of protection switching on neighboring channels cause by fast power variation.

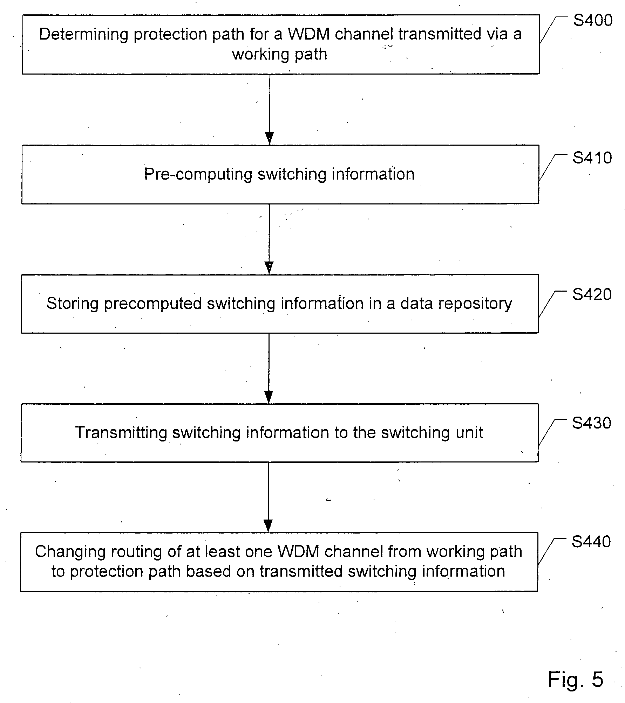

Fig. 5 shows a flow chart of a protection switching scenario according to one of the embodiments described above. First, for each working path provided within the optical data transmission network, a corresponding protection path is determined (S400). Said protection path provides free resources for one or more WDM channels transmitted via the working path. More in detail, the protection path provides a free WDM channel at the same wavelength slice, while said WDM channel is initially transmitted in the working path. Thus, said WDM channel can be switched from the working path to the protection path without wavelength conversion. Because of the non-exclusive reservation of the protection path, each WDM channel included in a working path may be associated with multiple protection path in order to increase the availability of an idle protection paths in case of multiple impairments within the optical data transmission network.

In order to reduce protection switching time, switching information associated with the switching unit comprised within a network node is pre-computed (S410). Said switching information may comprise switching settings used in the switching unit for an all-optical switching of a certain WDM channel or a group of the WDM channels from the working path to the protection path. More in detail, the switching settings may be used to control switching elements comprised within the switching unit, said switching elements being adapted to modify the optical path of an optical beam transmitted through the switching unit, thereby obtaining a re-routing of a WDM channel from a first output port to a second output port of the switching unit. After pre-computing said switching information, said switching information is stored within a data repository (S420).

After occurrence of a network impairment within a working path, said pre-computed switching information may be used for enabling fast protection switching from said working path to a protection path. At least a portion of the pre-computed switching information, specifically at least the switching settings, are transmitted to said switching unit included in a network node (S430). After receiving switching information at the switching unit, the routing of at least one WDM channel from the working path to the protection path is changed based on information included in the received switching information (S440).

Summing up, a method and an optical system for providing fast and resource-efficient protection switching from a working transmission path to a protection transmission path is proposed.

One or more optical protection paths, also referred to as backup paths are pre-computed for each working path by the optical network, like in a 1+1 protection scenario, but the protection resources are not exclusively reserved and assigned to working resources. Several backup paths may use same fibers and/or same wavelength. Backup paths are only used when needed. Since backup paths are not exclusively assigned to working paths, they can be shared amongst working paths. Backup paths use the same wavelength as the corresponding working path. The pre-computation of backup paths enables the pre-computation of complex control signals for one or more WSSs in each node. The complex control signals for the one or more WSSs ("images") are stored in a control database which can be local to the network node (LDB in Fig.4) or centralized for the entire (or part of the) network (CDB in Fig.4) at a management system, preferably with a local cache to accelerate switching.

The upper-described protection scenario can be used for an individual wavelength or a continuous waveband or multiple independent wavelengths, thereby making optimum use of free spectrum. Grouping wavelengths into wavebands or processing of multiple independent wavelengths in a single step is beneficial -this is the task of appropriate wavelength-assignment algorithms - because this way the number of paths and WSS control signals to administrate can be minimized.

Further, WSSs may also be adapted to detect a degradation of the optical power level at the ingress port on a per-wavelength basis (e.g. using wavelength tracker detection) and inform the optical control plane (local control entity and/or central control entity) about the affected channel(s). The control plane then gets the appropriate WSS images from the database and applies them to the WSS upstream of the failure and to the WSSs along the protection path.

By having WSS control images ready, only control-plane signaling and the actual WSS switching time contribute to the restoration time and no signaling is needed towards the client device (e.g. signals to a transmitter/receiver for wavelength tuning). Typical optical response times of liquid crystals are a few tens of milliseconds, but hitless (i.e. not affecting the neighboring channels) re-routing may require the WSS to go through several intermediate steps to complete a switching operation. This leads to typical values of several hundreds of milliseconds switching time (e.g. 200-500ms) for typical products. New emerging technologies have the potential to reduce liquid crystal response times to sub-milliseconds, thereby also speeding up the sequence of intermediate steps.

With MEMS, typical values today are also several hundreds of milliseconds. However this does not seem to be a technological limit and switching speeds below 10ms should be achievable in the near future. Including control-plane signaling this would allow faster restoration times which may even come close to the 50ms protection-switching time which is the requirement for premium service level, i.e. 1+1 protection.

The proposed method is advantageous because it allows effective protection with significantly reduced switching response time, thereby reducing the loss of information caused by transmission path impairments. More in detail:
- the restoration is handled entirely inside the optical network and is hidden from the client;
- no tunable transponders are required;
- pre-calculating protection paths and WSS images combined with advanced WSS technology can achieve much faster restoration times and possibly replace 1+1 protection in the long term;
- working and protection paths can be optimized in a wholistic manner. The optimum combination of working and protection path sometimes excludes the shortest route for the working path. If these paths are computed independently, the optimum may be missed;
- optical power-level equalization can be considered in advance and can be taken into account by the routing algorithm, thereby avoiding to affect neighboring channels. This supports again the upper-mentioned wholistic approach;
- there is less contention to find a free wavelength in the Tx block in the restoration case, because a tunable transponder can only use a protection wavelength which is not already routed by a WSS;
- shared protection requires much less resources (free wavelength channels) on the fiber network.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the explicit use of the term "processor" or "computer" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random-access memory (RAM), and non-volatile storage. Other hardware, conventional and/or custom, may also be included.

## Claims

1. Method for protection switching in an optical data transmission network (100) providing redundant transmission capacity for switching at least one WDM (wavelength division multiplex) channel from a working path (1, 2, 3) to a protection path (1B, 2B, 3B), the method comprising the steps of:
- receiving pre-computed switching information at a network node (110) of the optical data transmission network (100), said switching information at least partially comprising switching settings associated with a switching unit (200) comprised within the network node (110);
- in case of a network failure, providing at least a portion of the pre-computed switching information to the switching unit (200) included in the network node (100); and
- changing the routing of at least one WDM channel from the working path (1, 2, 3) to the protection path (1B, 2B, 3B) by the switching unit (200) based on information included in the pre-computed switching information;
**characterised in that** the switching unit (200) comprises a wavelength-selective switch (WSS) and the pre-computed switching information includes control information for controlling a switching engine of the WSS, wherein the pre-computed switching information comprises information regarding a multi-dimensional image including coordinate values and a gray value associated with each of said coordinate values for controlling the WSS according to said multi-dimensional image.

2. Method according to claim 1, wherein the switching settings include information for controlling switching elements included in the switching unit (200).

3. Method according to claim 2, wherein the optical path of an optical beam associated with a certain optical WDM channel is changed in the switching unit (200) by controlling the switching elements based on said switching settings.

4. Method according to anyone of the preceding claims, wherein the switching settings include information for controlling switching elements included in the switching unit (200) such that at least one WDM channel received at the input of the switching unit (200) is rerouted from a first output port (220) to a second output port (220) of said switching unit (200).

5. Method according to anyone of the preceding claims, wherein the pre-computed switching information comprises optical channel information, said optical channel information indicating which optical channel received by the switching unit (200) or which wavelength slice associated with a certain optical channel received by the switching unit (200) has to be switched.

6. Method according to anyone of the preceding claims, wherein the pre-computed switching information comprises at least one of the following:
- routing information, said routing information indicating at which input port (210) of the switching unit (200) the WDM channel to be switched is received and at which output port (220) of the switching unit (200) said WDM channel has to be transmitted;
- one or more attenuation coefficients being associated with at least one wavelength slice or WDM channel, said attenuation coefficients defining the attenuation level provided to said wavelength slice or WDM channel; and
- information regarding the switching mode, said switching mode defining the switching behavior of the switching unit (200).

7. Method according to anyone of the preceding claims, wherein the pre-computed switching information comprises information for releasing no longer used resources.

8. Method according to anyone of the preceding claims, further comprising:
- pre-computing said switching information in a network device other than the receiving network node; and
- storing the pre-computed switching information in a data repository (312, 322).

9. Method according to anyone of the preceding claims, wherein for each working path (1, 2, 3) multiple protection paths (1B, 2B, 3B) are pre-computed, and multiple working paths (1, 2, 3) share transmission resources provided by a single protection path (1B, 2B, 3B).

10. Method according to anyone of the preceding claims, wherein in case of changing the routing of at least one WDM channel from the working path (1, 2, 3) to the protection path (1B, 2B, 3B), the optical wavelength used for transmitting said WDM channel is maintained.

11. Method according to anyone of the preceding claims, wherein the switching information is stored in a local data repository (312) associated with the network node (110) comprising the switching unit (200) or the switching information is stored in a central data repository (322), said central data repository (322) being coupled with multiple network nodes (110) for providing pre-computed switching information to said multiple switching units (200).

12. A network node (110) for protection switching in an optical data transmission network (100) providing redundant transmission capacity for switching at least one WDM (wavelength division multiplex) channel from a working path (1, 2, 3) to a protection path (1B, 2B, 3B) comprising:
- a switching unit (200);
- a receiver unit configured to receive pre-computed switching information, said switching information at least partially comprising switching settings associated with the switching unit (200); and
- at least one processor unit configured to provide, in case of a network failure, at least a portion of the pre-computed switching information to the switching unit (200), the switching unit (200) configured to change the routing of at least one WDM channel from the working path (1, 2, 3) to the protection path (1B, 2B, 3B) based on information included in the pre-computed switching information;
**characterised in that** the switching unit (200) comprises a wavelength-selective switch (WSS) and the pre-computed switching information includes control information for controlling a switching engine of the WSS, wherein the pre-computed switching information comprises information regarding a multi-dimensional image including coordinate values and a gray value associated with each of said coordinate values for controlling the WSS according to said multi-dimensional image.

13. Optical data transmission system comprising an optical data transmission network (100) and at least one network node (110), said network node (110) including at least one switching unit (200) coupled with multiple transmission paths of said optical data transmission network (100), the switching unit (200) being adapted to switch at least one WDM (wavelength division multiplex) channel from a working path (1, 2, 3) to a protection path (1B, 2B, 3B), the optical data transmission system further comprising:
- a data processing unit being adapted to pre-compute switching information, said switching information at least partially comprising switching settings associated with said switching unit (200);
- a data repository (312, 322) for storing the pre-computed switching information; and
- a data link between said data repository (312, 322) and said switching unit (200) for transmitting, in case of a network failure, at least a portion of the pre-computed switching information to the switching unit (200) in order to change the routing of at least one WDM channel from the working path (1, 2, 3) to the protection path (1B, 2B, 3B) based on information included in the pre-computed switching information;
**characterised in that** the switching unit (200) comprises a wavelength-selective switch (WSS) and the pre-computed switching information includes control information for controlling a switching engine of the WSS, wherein the pre-computed switching information comprises information regarding a multi-dimensional image including coordinate values and a gray value associated with each of said coordinate values for controlling the WSS according to said multi-dimensional image.

## Patentansprüche

1. Verfahren zur Schutzumschaltung in einem optischen Datenübertragungsnetzwerk (100), das eine redundante Übertragungskapazität bereitstellt, zum Umschalten von mindestens einem WDM(Wellenlängenmultiplex)-Kanal von einem Arbeitspfad (1, 2, 3) zu einem Schutzpfad (1B, 2B, 3B), wobei das Verfahren die folgenden Schritte umfasst:
- Empfangen von vorberechneten Umschaltinformationen an einem Netzwerkknoten (110) des optischen Datenübertragungsnetzwerks (100), wobei die Umschaltinformationen zumindest teilweise Umschalteinstellungen umfassen, die mit einer Umschalteinheit (200) assoziiert sind, die innerhalb des Netzwerkknotens (110) enthalten ist;
- im Fall eines Netzwerkausfalls, Bereitstellen von mindestens einem Teil der vorberechneten Umschaltinformationen zu der Umschalteinheit (200), die im Netzwerkknoten (100) enthalten ist; und
- Ändern des Routings von mindestens einem WDM-Kanal vom Arbeitspfad (1, 2, 3) zum Schutzpfad (1B, 2B, 3B) durch die Umschalteinheit (200) basierend auf Informationen, die in den vorberechneten Umschaltinformationen enthalten sind;
**dadurch gekennzeichnet, dass** die Umschalteinheit (200) einen wellenlängenselektiven Schalter (WSS) umfasst und die vorberechneten Umschaltinformationen Steuerinformationen zum Steuern einer Umschalt-Engine des WSS beinhalten,
wobei die vorberechneten Umschaltinformationen Informationen bezüglich eines mehrdimensionalen Bildes umfassen, das Koordinatenwerte und einen Grauwert, der mit jedem der Koordinatenwerte assoziiert ist, zum Steuern des WSS gemäß dem mehrdimensionalen Bild beinhaltet.

2. Verfahren nach Anspruch 1, wobei die Umschalteinstellungen Informationen zum Steuern von Umschaltelementen, die in der Umschalteinheit (200) enthalten sind, beinhalten.

3. Verfahren nach Anspruch 2, wobei der optische Pfad eines optischen Strahls, der mit einem gewissen optischen WDM-Kanal assoziiert ist, in der Umschalteinheit (200) geändert wird, indem die Umschaltelemente basierend auf den Umschalteinstellungen gesteuert werden.

4. Verfahren nach einem der vorangegangenen Ansprüche, wobei die Umschalteinstellungen Informationen zum Steuern von Umschaltelementen, die in der Umschalteinheit (200) enthalten sind, beinhalten, sodass mindestens ein WDM-Kanal, der am Eingang der Umschalteinheit (200) empfangen wird, von einem ersten Ausgangsport (220) zu einem zweiten Ausgangsport (220) der Umschalteinheit (200) umgeleitet wird.

5. Verfahren nach einem der vorangegangenen Ansprüche, wobei die vorberechneten Umschaltinformationen optische Kanalinformationen umfassen, wobei die optischen Kanalinformationen angeben, welcher optischer Kanal, der durch die Umschalteinheit (200) empfangen wird, oder welches Wellenlängen-Slice, das mit einem gewissen optischen Kanal assoziiert ist, der durch die Umschalteinheit (200) empfangen wird, umgeschaltet werden muss.

6. Verfahren nach einem der vorangegangenen Ansprüche, wobei die vorberechneten Umschaltinformationen mindestens eines der Folgenden umfassen:
- Routing-Informationen, wobei die Routing-Informationen angeben, an welchem Eingangsport (210) der Umschalteinheit (200) der umzuschaltende WDM-Kanal empfangen wird und an welchem Ausgangsport (220) der Umschalteinheit (200) der WDM-Kanal übertragen werden muss;
- einen oder mehrere Abschwächungskoeffizienten, die mit mindestens einem Wellenlängen-Slice oder WDM-Kanal assoziiert sind, wobei die Abschwächungskoeffizienten das Abschwächungsniveau definieren, das dem Wellenlängen-Slice oder WDM-Kanal bereitgestellt wird; und
- Informationen bezüglich des Umschaltmodus, wobei der Umschaltmodus das Umschaltverhalten der Umschalteinheit (200) definiert.

7. Verfahren nach einem der vorangegangenen Ansprüche, wobei die vorberechneten Umschaltinformationen Informationen zum Freigeben von nicht mehr verwendeten Ressourcen umfassen.

8. Verfahren nach einem der vorangegangenen Ansprüche, ferner umfassend:
- Vorberechnen der Umschaltinformationen in einer Netzwerkeinrichtung außer dem Empfangsnetzwerkknoten; und
- Speichern der vorberechneten Umschaltinformationen in einem Daten-Repositorium (312, 322).

9. Verfahren nach einem der vorangegangenen Ansprüche, wobei für jeden Arbeitspfad (1, 2, 3) mehrere Schutzpfade (1B, 2B, 3B) vorberechnet werden und sich mehrere Arbeitspfade (1, 2, 3) Übertragungsressourcen, die durch einen einzigen Schutzpfad (1B, 2B, 3B) bereitgestellt werden, teilen.

10. Verfahren nach einem der vorangegangenen Ansprüche, wobei im Fall des Änderns des Routings von mindestens einem WDM-Kanal vom Arbeitspfad (1, 2, 3) zum Schutzpfad (1B, 2B, 3B) die optische Wellenlänge, die zum Übertragen des WDM-Kanals verwendet wird, beibehalten wird.

11. Verfahren nach einem der vorangegangenen Ansprüche, wobei die Umschaltinformationen in einem lokalen Daten-Repositorium (312), das mit dem Netzwerkknoten (110) assoziiert ist, der die Umschalteinheit (200) umfasst, gespeichert sind oder die Umschaltinformationen in einem zentralen Daten-Repositorium (322) gespeichert sind, wobei das zentrale Daten-Repositorium (322) mit mehreren Netzwerkknoten (110) gekoppelt ist, um den mehreren Umschalteinheiten (200) vorberechnete Umschaltinformationen bereitzustellen.

12. Netzwerkknoten (110) zur Schutzumschaltung in einem optischen Datenübertragungsnetzwerk (100), das eine redundante Übertragungskapazität bereitstellt, zum Umschalten von mindestens einem WDM(Wellenlängenmultiplex)-Kanal von einem Arbeitspfad (1, 2, 3) zu einem Schutzpfad (1B, 2B, 3B), umfassend:
- eine Umschalteinheit (200);
- eine Empfängereinheit, die dazu ausgelegt ist, vorberechnete Umschaltinformationen zu empfangen, wobei die Umschaltinformationen zumindest teilweise Umschalteinstellungen, die mit der Umschalteinheit (200) assoziiert sind, umfassen; und
- mindestens eine Prozessoreinheit, die dazu ausgelegt ist, im Fall eines Netzwerkausfalls mindestens einen Teil der vorberechneten Umschaltinformationen an die Umschalteinheit (200) bereitzustellen, wobei die Umschalteinheit (200) dazu ausgelegt ist, das Routing von mindestens einem WDM-Kanal vom Arbeitspfad (1, 2, 3) zum Schutzpfad (1B, 2B, 3B) basierend auf Informationen, die in den vorberechneten Umschaltinformationen enthalten sind, zu ändern;
**dadurch gekennzeichnet, dass** die Umschalteinheit (200) einen wellenlängenselektiven Schalter (WSS) umfasst und die vorberechneten Umschaltinformationen Steuerinformationen zum Steuern einer Umschalt-Engine des WSS beinhalten,
wobei die vorberechneten Umschaltinformationen Informationen bezüglich eines mehrdimensionalen Bildes umfassen, das Koordinatenwerte und einen Grauwert, der mit jedem der Koordinatenwerte assoziiert ist, zum Steuern des WSS gemäß dem mehrdimensionalen Bild beinhaltet.

13. Optisches Datenübertragungssystem, das ein optisches Datenübertragungsnetzwerk (100) und mindestens einen Netzwerkknoten (110) umfasst, wobei der Netzwerkknoten (110) mindestens eine Umschalteinheit (200), die mit mehreren Übertragungspfaden des optischen Datenübertragungsnetzwerks (100) gekoppelt ist, beinhaltet, wobei die Umschalteinheit (200) dazu ausgebildet ist, mindestens einen WDM(Wellenlängenmultiplex)-Kanal von einem Arbeitspfad (1, 2, 3) zu einem Schutzpfad (1B, 2B, 3B) umzuschalten, wobei das optische Datenübertragungssystem ferner Folgendes umfasst:
- eine Datenverarbeitungseinheit, die dazu ausgebildet ist, Umschaltinformationen vorzuberechnen, wobei die Umschaltinformationen zumindest teilweise Umschalteinstellungen, die mit der Umschalteinheit (200) assoziiert sind, umfassen;
- ein Daten-Repositorium (312, 322) zum Speichern der vorberechneten Umschaltinformationen; und
- eine Datenverknüpfung zwischen dem Daten-Repositorium (312, 322) und der Umschalteinheit (200) zum Übertragen, im Fall eines Netzwerkausfalls, von mindestens einem Teil der vorberechneten Umschaltinformationen zu der Umschalteinheit (200), um das Routing von mindestens einem WDM-Kanal vom Arbeitspfad (1, 2, 3) zum Schutzpfad (1B, 2B, 3B) basierend auf Informationen, die in den vorberechneten Umschaltinformationen enthalten sind, zu ändern;
**dadurch gekennzeichnet, dass** die Umschalteinheit (200) einen wellenlängenselektiven Schalter (WSS) umfasst und die vorberechneten Umschaltinformationen Steuerinformationen zum Steuern einer Umschalt-Engine des WSS beinhalten,
wobei die vorberechneten Umschaltinformationen Informationen bezüglich eines mehrdimensionalen Bildes umfassen, das Koordinatenwerte und einen Grauwert, der mit jedem der Koordinatenwerte assoziiert ist, zum Steuern des WSS gemäß dem mehrdimensionalen Bild beinhaltet.

## Revendications

1. Procédé de commutation de protection dans un réseau optique de transmission de données (100) fournissant une capacité de transmission redondante permettant de commuter au moins un canal WDM (multiplexage par division de longueur d'onde) d'un chemin de travail (1, 2, 3) à un chemin de protection (1B, 2B, 3B), le procédé comprenant les étapes suivantes :
- réception d'informations de commutation pré-calculées au niveau d'un noeud de réseau (110) du réseau optique de transmission de données (100), lesdites informations de commutation comprenant au moins partiellement des paramètres de commutation associés à une unité de commutation (200) comprise dans le noeud de réseau (110) ;
- en cas de défaillance du réseau, fourniture d'au moins une partie des informations de commutation pré-calculées à l'unité de commutation (200) incluse dans le noeud de réseau (100) ; et
- changement du routage d'au moins un canal WDM du chemin de travail (1, 2, 3) au chemin de protection (1B, 2B, 3B) par l'unité de commutation (200) sur la base des informations incluses dans les informations de commutation pré-calculées ;
**caractérisé en ce que**
l'unité de commutation (200) comprend un commutateur à sélection de longueur d'onde (WSS) et les informations de commutation pré-calculées comprennent des informations de commande destinées à commander un moteur de commutation du WSS, dans lequel les informations de commutation pré-calculées comprennent des informations concernant une image multidimensionnelle comprenant des valeurs de coordonnées et une valeur de gris associée à chacune desdites valeurs de coordonnées pour commander le WSS conformément à ladite image multidimensionnelle.

2. Procédé selon la revendication 1, dans lequel les paramètres de commutation comprennent des informations pour commander des éléments de commutation inclus dans l'unité de commutation (200).

3. Procédé selon la revendication 2, dans lequel le chemin optique d'un faisceau optique associé à un certain canal optique WDM est modifié dans l'unité de commutation (200) en commandant les éléments de commutation sur la base desdits paramètres de commutation.

4. Procédé selon l'une quelconque des revendications précédentes, dans lequel les paramètres de commutation comprennent des informations pour commander des éléments de commutation inclus dans l'unité de commutation (200) de telle sorte qu'au moins un canal WDM reçu à l'entrée de l'unité de commutation (200) soit réacheminé d'un premier port de sortie (220) vers un second port de sortie (220) de ladite unité de commutation (200).

5. Procédé selon l'une quelconque des revendications précédentes, dans lequel les informations de commutation pré-calculées comprennent une information de canal optique, ladite information de canal optique indiquant quel canal optique reçu par l'unité de commutation (200) ou quelle tranche de longueur d'onde associée à un certain canal optique reçu par l'unité de commutation (200) doivent être commutés.

6. Procédé selon l'une quelconque des revendications précédentes, dans lequel les informations de commutation pré-calculées comprennent au moins l'un des éléments suivants :
- une information de routage, ladite information de routage indiquant au niveau de quel port d'entrée (210) de l'unité de commutation (200) le canal WDM à commuter est reçu et au niveau de quel port de sortie (220) de l'unité de commutation (200) ledit canal WDM doit être transmis ;
- un ou plusieurs coefficients d'atténuation étant associés à au moins une tranche de longueur d'onde ou canal WDM, lesdits coefficients d'atténuation définissant le niveau d'atténuation fourni à ladite tranche de longueur d'onde ou audit canal WDM ; et
- des informations concernant le mode de commutation, ledit mode de commutation définissant le comportement de commutation de l'unité de commutation (200).

7. Procédé selon l'une quelconque des revendications précédentes, dans lequel les informations de commutation pré-calculées comprennent des informations pour libérer des ressources qui ne sont plus utilisées.

8. Procédé selon l'une quelconque des revendications précédentes, comprenant en outre les étapes suivantes :
- pré-calcul desdites informations de commutation dans un dispositif de réseau autre que le noeud de réseau de réception ; et
- stockage des informations de commutation pré-calculées dans un référentiel de données (312, 322).

9. Procédé selon l'une quelconque des revendications précédentes, dans lequel, pour chaque chemin de travail (1, 2, 3), plusieurs chemins de protection (1B, 2B, 3B) sont pré-calculés et plusieurs chemins de travail (1, 2, 3) partagent des ressources de transmission fournies par un seul chemin de protection (1B, 2B, 3B).

10. Procédé selon l'une quelconque des revendications précédentes, dans lequel, en cas de changement du routage d'au moins un canal WDM du chemin de travail (1, 2, 3) au chemin de protection (1B, 2B, 3B), la longueur d'onde optique utilisée pour transmettre ledit canal WDM est conservée.

11. Procédé selon l'une quelconque des revendications précédentes, dans lequel les informations de commutation sont stockées dans un référentiel de données local (312) associé au noeud de réseau (110) comprenant l'unité de commutation (200) ou bien les informations de commutation sont stockées dans un référentiel de données central (322), ledit référentiel de données central (322) étant couplé à plusieurs noeuds de réseau (110) pour fournir des informations de commutation pré-calculées auxdites unités de commutation multiples (200).

12. Noeud de réseau (110) pour la commutation de protection dans un réseau optique de transmission de données (100) fournissant une capacité de transmission redondante pour commuter au moins un canal WDM (multiplexage par division de longueur d'onde) d'un chemin de travail (1, 2, 3) à un chemin de protection (1B, 2B, 3B) comprenant :
- une unité de commutation (200) ;
- une unité réceptrice configurée pour recevoir des informations de commutation pré-calculées, lesdites informations de commutation comprenant au moins partiellement des paramètres de commutation associés à l'unité de commutation (200) ; et
- au moins une unité de processeur configurée pour fournir, en cas de défaillance du réseau, au moins une partie des informations de commutation pré-calculées à l'unité de commutation (200), l'unité de commutation (200) étant configurée pour changer le routage d'au moins un canal WDM du chemin de travail (1, 2, 3) au chemin de protection (1B, 2B, 3B) sur la base des informations incluses dans les informations de commutation pré-calculées ;
**caractérisé en ce que**
l'unité de commutation (200) comprend un commutateur à sélection de longueur d'onde (WSS) et les informations de commutation pré-calculées comprennent des informations de commande destinées à commander un moteur de commutation du WSS, dans lequel les informations de commutation pré-calculées comprennent des informations concernant une image multidimensionnelle comprenant des valeurs de coordonnées et une valeur de gris associée à chacune desdites valeurs de coordonnées pour commander le WSS conformément à ladite image multidimensionnelle.

13. Système optique de transmission de données comprenant un réseau optique de transmission de données (100) et au moins un noeud de réseau (110), ledit noeud de réseau (110) comprenant au moins une unité de commutation (200) couplée à de multiples chemins de transmission dudit réseau optique de transmission de données (100), l'unité de commutation (200) étant conçue pour commuter au moins un canal WDM (multiplexage par division de longueur d'onde) d'un chemin de travail (1, 2, 3) à un chemin de protection (1B, 2B, 3B), le système optique de transmission de données comprenant en outre :
- une unité de traitement de données conçue pour pré-calculer des informations de commutation, lesdites informations de commutation comprenant au moins partiellement des paramètres de commutation associés à ladite unité de commutation (200) ;
- un référentiel de données (312, 322) pour stocker les informations de commutation pré-calculées ; et
- une liaison de données entre ledit référentiel de données (312, 322) et ladite unité de commutation (200) pour transmettre, en cas de défaillance du réseau, au moins une partie des informations de commutation pré-calculées à l'unité de commutation (200) afin de changer le routage d'au moins un canal WDM du chemin de travail (1, 2, 3) au chemin de protection (1B, 2B, 3B) sur la base des informations incluses dans les informations de commutation pré-calculées ;
**caractérisé en ce que**
l'unité de commutation (200) comprend un commutateur à sélection de longueur d'onde (WSS) et les informations de commutation pré-calculées comprennent des informations de commande destinées à commander un moteur de commutation du WSS, dans lequel les informations de commutation pré-calculées comprennent des informations concernant une image multidimensionnelle comprenant des valeurs de coordonnées et une valeur de gris associée à chacune desdites valeurs de coordonnées pour commander le WSS conformément à ladite image multidimensionnelle.
